# EUROPEAN PATENT APPLICATION

(11) **EP 0 534 016 A1**
(43) Date of publication of application: **31.03.1993**
(21) Application number: 91250261.4
(22) Date of filing: 25.09.1991
(51) Int. Cl.: B01D 15/00, B01J 20/26, B01J 20/32, G01N 30/48, G01N 30/30, G01N 30/54, B01D 15/08

(54) **Liquid chromatographic matrices and liquid chromatography using same**

(71) Applicant: W.R. Grace & Co.-Conn., New York, New York 10036 (US)
(72) Inventor: Mori, Yuichi, Yokohama-shi, Kanagawa-ken (JP); Yoshioka, Hiroshi, Odawara-shi, Kanagawa-ken (JP); Coryell, Bruce Rollin, South Berwick, Maine 03908 (JP)
(74) Representative: UEXKÜLL & STOLBERG

(57) **Abstract**

A liquid chromatographic matrix comprised of at least one water-insolubilized, temperature-responsive polymer compound having LCST. The matrix exhibits a hydrophobicity at a temperature higher than the LCST and hydrophilicity at a temperature below the LCST. A process of using the matrix involves chromatographying a sample by varying the temperature of a liquid chromatography column between a temperature above said LCST and a temperature below said LCST over the course of the process.

## Description

### Technical Field

The present invention relates to a liquid chromatographic matrix comprised of at least one water-insolubilized temperature-responsive polymeric compound having an LCST. More particularly, it relates to a liquid chromatographic matrix which can change its hydrophilic/hydrophobic property by changing temperature. The present invention relates also to a liquid chromatographic process of using the liquid chromatographic matrix.

### Background Art

Liquid chromatography is a technique by which solutes are separated and eluted based on the difference in interaction of each of the solutes and the matrix during movement of the mixed phase of the solutes through the matrix packed in a column. Movement of the phase is performed by applying a pressure. Interactions between solutes and a matrix can be classified into physical interaction and chemical interaction. The physical interaction means recognition of shape or size of the solutes by the physical morphology of the matrix, and the chemical interaction is represented by the chemical affinities such as electrostatic force, force of hydrogen bonding, force among dipolets, van der Waals force, and hydrophobic bonding force working among the three components of the solutes, the matrix and the mobile phase.

On the other hand, the separation mechanism of liquid chromatography can be roughly divided into molecular sieving, partition and adsorption, based on their phenomena. Molecular sieving corresponds to the above described physical interaction, and partition and adsorption correspond to the above described chemical interaction. The liquid chromatographic matrix of the present invention utilizes the latter which is the chemical interaction such as partition and adsorption. Retention of solutes in liquid chromatography is controlled by the balance of the strength of affinities between the solutes and the matrix and between the solutes and the mobile phase. Generally, when the matrix has a stronger polarity than the mobile phase, it is called normal phase chromatography, and when the mobile phase has a stronger polarity than the matrix, it is called reversed phase chromatography.

As a matter of principle, selection of a system with a stronger affinity of the solute to the matrix than to the mobile phase is important for achieving a better separation, and the normal chromatography is suitable for the solutes having a strong polarity, and separation by the reversed phase chromatography is more suitable for non-polar solutes. Thus, in the conventional liquid chromatography a highly polar solvent such as water or a weakly polar organic solvent or its mixture is selected as the mobile phase and a highly polar hydrophilic or electrically charged substance or a weakly polar hydrophobic substance is selected as the matrix, and it is known that their combination can greatly affect the efficiency of separation. The matrices which are conventionally used can be roughly divided into two types, i.e., silica gel packing materials and polymer gel packing materials. Silica gel packing materials are used in the reversed phase chromatography of bio-related compounds such as proteins, using a polar solvent in an aqueous system. Particularly, those incorporated with a hydrophobic group such as a linear alkyl group such as methyl, n-octyl and n-octadecyl, a phenyl group or a cyano group on the surface of silica gel are most commonly used today as the reversed phase chromatographic matrix. On the other hand, polystyrene gel, polymethacrylic acid gel, polyacetate gel, polyvinyl alcohol gel and starch gel are available as the polymer gel packing materials, and their hydrophobicity decreases in the above described order. In these polymer gels a crosslinked structure is incorporated. Those in which polyethylene glycol or a hydroxyl group is incorporated onto the surface of gel have been developed for the normal phase chromatography imparted with even stronger polarity. On the other hand, those in which a strongly hydrophobic linear alkyl group or a phenyl group is incorporated onto the surface of gel have been developed for the reversed phase chromatography.

On the other hand, a non-polar solvent such as n-hexane, cyclohexane, benzene and carbon tetrachloride is mainly used as the mobile phase in the normal phase chromatography and a polar solvent such as water, methanol and acetonitrile is mainly used as the mobile phase in the reversed phase chromatography. In recent years, particularly for the reversed phase chromatography, it is found effective to use a gradient elution process by which the amount of an organic solvent, relative to water, in the mobile phase is increased to enhance elution in a system which is difficult to elute due to adsorption on the matrix by hydrophobic bonding, and this process has since been widely practiced. Particularly, many bio-related substances such as proteins are difficult to elute due to formation of hydrophobic bonding with the matrix in an aqueous solution, and the above described gradient elution process is found very effective. However, it is also found that compounds such as proteins having a higher order structure closely related to their activity have such a serious problem that addition of an organic solvent can cause a fatal inactivation of the activity. This problem is fatal, particularly, with the reversed phase chromatography which is the most effective means today for the separation of bio-related compounds. With the liquid chromatographic techniques relating to the mobile phase or packing materials which have been developed to date, it has been difficult to avoid this problem.

An object of the present invention is to solve the above described problems in conventional liquid chromatography.

Another object of the present invention is to solve, particularly, the problem in the reversed phase chromatography that the organic solvent added to enhance elution of the solutes from the matrix causes denaturation of bio-related compounds such as proteins.

Still another object of the present invention is to provide a liquid chromatographic matrix that enables separation and elution of the solutes by changing the degree of hydrophobicity or hydrophilicity through change of temperature.

A further object of the present invention is to provide a liquid chromatographic technique which utilizes such a matrix.

### SUMMARY OF THE INVENTION

The term "LCST" is used herein to mean a lower critical solution temperature which is a transition temperature of a temperature-responsive polymeric compound between hydration and dehydration.

The liquid chromatographic matrix in accordance with the present invention comprises at least one water-insolubilized temperature-responsive polymeric compound having a LCST.

In another aspect of the invention a liquid chromatographic process comprises contacting a sample to be separated with a liquid chromatographic matrix comprising at least one water-insolubilized temperature-responsive polymeric compound having an LCST in a column and varying the temperature of the said column between a temperature above the LCST of the temperature-responsive polymeric compound and a temperature below the LCST over the course of the process.

### DETAILED EXPLANATION OF THE INVENTION

The liquid chromatographic matrix of the present invention employs at least one water-insolubilized temperature-responsive polymeric compound having an LCST.

A temperature-responsive polymeric compound shows, in the presence of water, hydrophobicity at a temperature higher than the LCST and changes to show hydrophilicity at a temperature below the LCST, and such a change is characterized by being thermally reversible.

Change of state of the temperature-responsive polymer compounds is said to be caused by hydration and dehydration. This has been explained by Haskins, M., et al in J. Macromol. Sci. Chem., A2 (8), 1441, 1968, using as the sample the poly-N-isopropylacrylamide (hereinafter "PNIPAAm") which is one of such polymeric compounds. PNIPAAm is a polymeric compound which has a negative temperature coefficient of solubility. PNIPAAm shows hydrophilic property at a lower temperature because a hydrate (oxonium hydroxide), which depends on the hydrogen bond of a PNIPAAm molecule and a water molecule, is formed at low temperatures. However, because the oxonium hydroxide degrades and dehydrates when temperature is raised above the LCST, the PNIPAAm molecule becomes hydrophobic and precipitates as a result.

The above described change can be similarly observed in the system where crosslinking has been incorporated in the temperature-responsive polymeric compound and also in the system where the polymeric compound has been graft-polymerized.

When the matrix made of such temperature-responsive polymeric compound is used as the packing material for liquid chromatography, it will be possible to perform the separation of solutes by changing the hydrophobicity or hydrophilicity, i.e., polarity, of the packing material reversibly by temperature. The packing material shows polarity at a temperature below the LCST, and when the temperature is increased above LCST, the polarity of the packing material declines, and it changes to reversed phase chromatography.

Thus it can be said that a new process for liquid chromatography has been developed by utilizing such property of the matrix of the present invention.

The liquid chromatographic process of the present invention is characterized by changing temperature between a temperature above the LCST and a temperature below the LCST with the progression of time after charging a sample to be separated on the matrix made of at least one water-insolubilized temperature-responsive polymeric compound that has LCST. Temperature may be changed from a temperature above the LCST to a temperature below the LCST, or from a temperature below the LCST to a temperature above the LCST, or temperature may be repeatedly changed at predetermined intervals between a temperature above the LCST and a temperature below the LCST.

For example, solutes can be held on the matrix by hydrophobic bonding by carrying out a reversed phase chromatography at a temperature above the LCST, followed by lowering temperature to a temperature below the LCST to elute the solutes. According to the process of the present invention, there is no need to add any organic solvent for elution. Thus, the process of the present invention is particularly useful for the separation of bio-related compounds such as proteins because it will never cause denaturation which has been the problem in the prior art. It is also possible to create the same effect as the conventional gradient elution process which elutes the solutes by continuously changing the mixing ratio of water and an organic solvent, by changing the temperature of the packing material from a temperature higher than the LCST to a temperature below the LCST with the progress of time. In this instance, it is preferred to continuously vary the hydrophobicity of the matrix in a wide temperature range. This can be achieved by the use of a combination of a plurality of water-insolubilized temperature-responsive polymeric compounds having different LCSTs from one another.

The process of this invention is simple to run because only the temperature of the column has to be changed and faces no risk of denaturation of bio-related substances because any organic solvent is not required. In addition, the process of the present invention does not require the laborious operation of the prior art which has to continuously change the mixing ratio of the mixed solvents as the developing fluid. In these respects, the process of the present invention is extremely useful.

As another embodiment of the present invention, it is also possible to perform separation by creating a temperature gradient in the zone between the inlet and outlet of the column packed with the matrix. Thus, when the inlet is set at a temperature below LCST and the outlet is set at a temperature above the LCST, the packing material at the inlet will have a higher polarity and the polarity will decrease and eventually become non-polar at the outlet, thus creating a polarity gradient. It is also possible to create a gradient which is entirely opposite to what has been described above. It is believed that separation will be possible with the system which has been difficult to separate by the conventional art, by using the column having the above described polarity gradient. Because of this reason, the range of applications of the chromatographic process of the present invention is extremely broad and practicability and effectiveness of the present invention are very high.

The temperature-responsive polymeric compounds which are insolubilized in water before use for the liquid chromatographic matrix of the present invention includes, for examples, poly-N-substituted acrylamide or methacrylamide derivatives and their copolymers, polyvinylmethyl ether, polyethylene oxide, etherized methylcellulose, and partially acetylated polyvinyl alcohol. Particularly preferred are poly-N-substituted acrylamide or methacrylamide derivatives and their copolymers, polyvinylmethyl ether, and partially acetylated polyvinyl alcohol.

Preferred examples of such temperature-responsive polymeric compounds are listed below. The LCSTs of these polymers rise with the sequence of polymers listed below.
Poly-N-acryloyl piperidine
Poly-N-n-propyl methacrylamide
Poly-N-isopropyl acrylamide
Poly-N,N-diethyl acrylamide
Poly-N-isopropyl methacrylamide
Poly-N-cyclopropyl acrylamide
Poly-N-acryloyl pyrrolidine
Poly-N,N-ethylmethyl acrylamide
Poly-N-cyclopropyl methacrylamide
Poly-N-ethyl acrylamide
The above described polymers may be homopolymers or copolymers with other monomers. Any hydrophilic monomers and hydrophobic monomers can be used as the monomers for copolymerization. Generally speaking, copolymerization with a hydrophilic monomer will raise the LCST, and copolymerization with a hydrophobic monomer will lower the LCST. With a proper selection of monomers, a copolymer with a desired LCST can be achieved.

Examples of suitable hydrophilic monomers are N-vinylpyrrolidine, vinylpyridine, acrylamide, methacrylamide, N-methyl acrylamide, hydroxyethyl methacrylate, hydroxyethyl acrylate, hydroxymethyl methacrylate, hydroxymethyl acrylate, acrylic acid, methacrylic acid and their salts, vinylsulfonic acid and styrylsulfonic acid and N,N-dimethylaminoethyl methacrylate, N,N-diethylaminoethyl methacrylate, N,N-dimethylaminopropyl acrylamide and their salts, but the present invention is not limited to these compounds.

Examples of suitable hydrophobic monomers are acrylate or methacrylate derivatives such as ethyl acrylate, methyl methacrylate, n-butyl acrylate, n-butyl methacrylate, glycidyl methacrylate; N-substituted alkyl acrylamide or methacrylamide derivatives such as N-n-butyl acrylamide or methacrylamide; vinyl chloride; acrylonitrile; styrene; and vinyl acetate but the present invention is not limited to these compounds.

One of the method of insolubilizing the above described temperature-responsive polymeric compounds in water is to incorporate crosslinks in these polymeric compounds.

For example, when the liquid chromatographic matrix is prepared from the above described temperature responsive polymeric compound alone, suspension polymerization or disperision polymerizaiton is carried out. The particle size and the pore size of the polymeric compounds can be regulated by the dispersion medium, its viscosity, the agitation speed, the dispersion stabilizer and the solvent selected. The particle size which can be employed for the liquid chromatographic matrix of the present invention is typically 1 to 100 µm, preferably 2 to 10 µm, and the pore size is typically 50 to 500 Å and preferably 100 to 500Å.

The polymeric compounds thus obtained are irradiated with light, electron rays and gamma rays to incorporate intermolecular crosslinks in these polymeric compounds.

Another method of insolubilizing the temperature-responsive polymeric compounds in water is to copolymerize at least one monomer used for forming the temperature-responsive polymeric compounds described hereinabove and a multi-functional monomer copolymerizable therewith, such as N,N-methylenebisacrylamide, hydroxethyl dimethacrylate and divinylbenzene to give a copolymer having a crosslinked structure by the conventional process.

Still another method of insolubilizing the temperature-responsive polymeric compounds in water is to coat the polymeric compounds in an aqueous solution on the surface of a supporting material and to irradiate the polymeric compounds with light, electron rays or gamma rays to incorporate intermolecular crosslinks in these polymeric compounds.

A further method of insolubilizing the temperature-responsive polymeric compounds in water is to graft polymerize at least one monomer used for forming the temperature-responsive polymeric compounds as described hereinabove onto the surface of a supporting material by selecting an appropriate conventional method depending on such properties as the material of the supporting material and its shape. For example, graft polymerization can be carried out onto the surface of the supporting material by the low temperature plasma polymerization without losing the properties of the supporting material. In addition, the conventional graft polymerization techniques such as ozone oxidation process and cerium ion treatment process can be employed in the present invention.

A still another method of insolubilizing the temperature-responsive polymeric compounds in water is to graft-polymerize the temperature responsive polymeric compound on the surface of a supporting material.

The supporting materials which can be employed in the present invention in the coating of the temperature-responsive polymeric compounds or in the graft polymerization of the polymeric compounds or at least one monomer for forming the polymeric compounds include, for example, porous substances such as silica gel and polymer gels which are used as the liquid chromatographic packing material; and polymers such as polystyrene, polymethyl methacrylate, polyvinyl acetate and polyvinyl alcohol.

When the porous supporting materials are employed, it is preferred that a desired pore size and a desired particle size are previously selected. Also it is preferred that the number average molecular weight of the temperature-responsive polymeric compound is not greater than 5,000, most preferably from about 500 to about 5,000 in order to avoid covering the pores. Such temperature-responsive polymeric compounds having a number average molecular weight of not greater than 5,000 can be incorporated into the supporting material by, first, introducing a reactive functional group at the terminal of the polymeric compound having a number average molecular weight of at most 5,000 by the chain transfer reaction and, second, allowing the reactive functional group thus introduced to react with the previously introduced functional group on the surface of the supporting material capable of reacting with the reactive functional group.

The present invention is further explained by the following examples which are given for illustrative purposes and are not meant to limit the invention.

### Example 1

Polystyrene gel about 10 g ("PLRP-S300", average particle size: 10 µm, average pore size: 300 Å, a product of Polymer Laboratories Ltd. in the United Kingdom) which is a copolymer of styrene and divinylbenzene was inserted into the chamber of a plasma irradiation device of an internal electrode type (manufactured by Samco International K.K.). After the chamber was evacuated to about 0.02 Torr, argon gas was introduced at a flow rate of about 20 ml/min., and the gel was irradiated under agitation with plasma for 50 seconds at a frequency 13.56 MHz and at an output of 50 Watt. Then, an aqueous 10 w/v % N-isopropyl acrylamide (hereinafter "NIPAAm") solution was introduced into the chamber where the gel was immersed in the solution to carry out graft polymerization at room temperature for 18 hours. Air dissolved in the aqueous solution had been completely removed by sufficiently bubbling with argon gas prior to the introduction of the aqueous monomer solution into the chamber. The graft-polymerized gel thus obtained was thoroughly washed with distilled water to completely remove the remaining monomer.

The graft polymerized gel thus obtained was packed in a mini column having an inner diameter of 4.6 mm and a length of 15 cm, and an aqueous solution of ovoalbumin (5 µg) was injected into the column as the sample at 37°C at a flow rate of 1 ml/minute to conduct the elution. The detection of eluates was carried out by measuring absorbance at 280 nm, and no elution of ovoalbumin was observed.

On the other hand, when the elution was carried out under the same conditions as described above while the column temperature was continuously lowered from 37°C to room temperature over about 30 minutes, the elution of ovoalbumin was observed by the measurement of absorbance.

This experimental fact shows that the ovoalbumin firmly held on the matrices could be easily eluted by merely changing the column temperature. In addition, it shows also that, unlike the process of the prior art, ovoalbumin can be separated without causing denaturation.

### Example 2

NIPAAm 11.3 g (0.1 mol), 2-mercaptoethylamine 3.08 g (0.04 mol) and azobisisobutyronitrile 0.81 g (0.005 mol) were dissolved in benzene 400 ml and the reaction was carried out at 60°C for 8 hours in a nitrogen atmosphere. The reaction solution thus obtained was filtered, and the residue was dissolved in tetrahydrofuran and then precipitated in ether. The precipitate thus formed was separated by filtration, dissolved in cold water, added with sodium chloride and then heated to 40°C to form precipitate. The precipitate thus formed was recovered by filtration and dried. Then the precipitate thus dried was dissolved in chloroform and the solution was filtered and the chloroform was removed to give an NIPAAm oligomer having a primary amino group at the terminal. The number average molecular weight of the NIPAAm oligomer was about 2,000 by the quantitative analysis of the primary amino group.

Distilled water 50 ml and a 25 w/v % glutaraldehyde solution 2 ml were added to silica gel having primary amino groups on its surface ("CHROMATREX-NH", average particle size: 10 µm, average pore size: 300 Å, a product of Fuji Davison Chemicals Ltd. in Japan) about 10 g and the mixture was agitated at room temperature for one hour. Then the gel was thoroughly washed with distilled water to remove excess glutaraldehyde, and the NIPAAm oligomer as obtained above 4.8 g and distilled water 50 ml were added to the gel and the mixture was agitated overnight at room temperature. Further, isopropylamine 0.5 ml was added to the mixture thus agitated to inactivate the remaining aldehyde groups and then the gel was thoroughly washed with distilled water to give silica gel grafted with the NIPAAm oligomer.

The silica gel thus obtained was packed in the same column as in Example 1 and the same experiment as in Example 1 was carried out under the same conditions as in Example 1 to give the same result as in Example 1.

### Example 3

NIPAAm 10.7 g (0.095 mo]), n-butyl methacrylate (hereinafter "BMA") 0.71 g (0.005 mol), 2-mercaptoethylamine 3.08 g (0.04 mol) and azobisisobutyronitrile 0.81 g (0.05 mol) were dissolved in benzene 400 ml and the reaction was carried out at 60°C for 8 hours in a nitrogen atmosphere. The reaction Solution thus obtained was filtered and the residues was dissolved in tetrahydrofuran and then precipitated in ether. The precipitate thus formed was separated by filtration, dissolved in cold water, added with sodium chloride and then heated to 40°C to form precipitate. The precipitate thus formed was recovered by filtration and dried. Then the precipitate thus dried was dissolved in chloroform and the solution was filtered and the chloroform was removed to give an co-oligomer of NIPAAm and BMA having a primary amino group at the terminals (hereinafter "NIPAAm-co-BMA oligomer"). The number average molecular weight of the NIPAAm-co-BMA oligomer was about 3,000 by the quantitative analysis of the primary amino groups.

Distilled water 50 ml and a 25 w/v % glutaraldehyde solution 2 ml were added to the same silica gel as employed in Example 2 and the mixture was agitated at room temperature for one hour. Then the gel was thoroughly washed with distilled water to remove excess glutaraldehyde, and the NIPAAm-co-BMA oligomer as obtained 3.6 g, the NIPAAm oligomer 2.4 g as obtained in Example 2 and distilled water 50 ml were added to the gel and the mixture was agitated overnight at room temperature. Further, isopropylamine 0.5 ml was added to the resulting mixture thus agitated to inactivate the remaining aldehyde groups and then the gel was thoroughly washed with distilled water to give silica gel grafted with two temperature-responsive polymeric compounds having different LCSTs, i.e., the NIPAAm oligomer having an LCST of about 30°C and the NIPAAm-co-BMA oligomer having an LCST of about 25°C.

The silica gel thus obtained was packed in the same column as in Example 1 and the separation of ovoalbumin and lysozyme was carried out in the same manner as in Example 1. When the elution of the two peptides was carried out by continuously lowering the column temperature from 37°C to 15°C over 30 minutes, no elution of the peptides could be observed above 30°C but at a temperature between 30°C and 25°C the elution of ovoalbumin was observed and at a temperature between 25°C and 20°C the elution of lysozyme was observed.

## Claims

1. A liquid chromatographic matrix comprising at least one water-insolubilized, temperature-responsive polymeric compound having an LCST.

2. The matrix of Claim 1, wherein said polymeric compound has a crosslinked structure.

3. The matrix of Claim 2, wherein said polymeric compound is selected from the group consisting of a poly-N-substituted acrylamide derivative, a poly-N-substituted methacrylamide derivative, their copolymers, polyvinylmethyl ether and partially acetylated polyvinyl alcohol.

4. The matrix of Claim 2, wherein said polymeric compound is a copolymer of at least one monomer used for forming the temperature-responsive polymer and a multi-functional monomer copolymerizable therewith.

5. The matrix of Claim 1 or 3, wherein said polymeric compound is provided on a supporting material.

6. The matrix of Claim 5, wherein said polymeric compound is graft polymerized on the surface of a supporting material.

7. The matrix of Claim 5, wherein said supporting material is a porous material selected from silica gel or a polymer gel.

8. The matrix of Claim 5, wherein the supporting material is a polymer selected from the group consisting of polystyrene, polymethyl methacrylate, polyvinyl acetate and polyvinyl alcohol.

9. The matrix of Claim 7, wherein the number average molecular weight of said temperature-responsive polymeric compound is not greater than 5,000.

10. The matrix of Claim 1, wherein said temperature-responsive polymeric compound is a combination of a plurality of water-insolubilzed temperature-responsive polymeric compounds having different LCSTs from one another.

11. A process for liquid chromatographing a sample comprising contacting a sample to be separated with a liquid chromatographic matrix comprising at least one water-insolubilized, temperature-responsive polymeric compound having an LCST in a column and varying the temperature of said column between a temperature above said LCST and a temperature below said LCST over the course of the process.

12. The process of Claim 11, wherein the temperature of said column is varied from a temperature above the LCST of said temperature-responsive polymeric compound to a temperature below said LCST with the progression of time.

13. The process of Claim 12, wherein said temperature of the column is repeatedly varied at predetermined intervals of time.

14. The process of Claim 11, wherein the temperature of said column is varied from a temperature below the LCST of said temperature-responsive polymeric compound to a temperature above said LCST with the progression of time.

15. The process of Claim 14, wherein the temperature of the column is repeatedly varied at predetermined intervals of time.

16. The process of Claim 11, wherein a temperature gradient ranging from a temperature below the LCST of the temperature-responsive polymeric compound to a temperature above the LCST in the zone between the inlet and the outlet of the column is provided with said column.

17. The process of claim 16, wherein the temperature of the inlet of said column is set at a temperature above the LCST of said temperature-responsive polymeric compound and that of the outlet is set at a temperature below the LCST.

18. The process of Claim 16, wherein the temperature of the inlet of said column is set at a temperature below the LCST of said temperature-responsive polymeric compound and that of the outlet is set at a temperature above the LCST.

19. The process of claim 11, wherein said temperature responsive polymeric compound is a combination of a plurality of water-insoluble temperature-responsive polymeric compounds having different LCSTs from one another.
